# EUROPEAN PATENT SPECIFICATION

(11) **EP 3 375 305 B1**
(45) Date of publication and mention of the grant of the patent: **13.11.2019**
(21) Application number: 18161973.5
(22) Date of filing: 15.03.2018
(51) Int. Cl.: A24F 47/00, H02J 7/00

(54) **BATTERY ASSEMBLY AND ELECTRONIC CIGARETTE HAVING SAME**
BATTERIEANORDNUNG UND ELEKTRONISCHE ZIGARETTE DAMIT
ENSEMBLE DE BATTERIE ET CIGARETTE ÉLECTRONIQUE LE COMPRENANT

(30) Priority: 15.03.2017 CN 201720254139 U
(43) Date of publication of application: 19.09.2018
(73) Proprietor: Shenzhen IVPS Technology Co., Ltd., 518000 Shenzhen Guangdong (CN)
(72) Inventor: CHEN, Wen, Shenzhen, Guangdong 518000 (CN)
(74) Representative: IP-PAL Patent & Trademark Attorneys GmbH

(56) References cited:
- EP-A1- 2 562 846
- WO-A1-2016/185359
- US-A- 4 997 731

## Description

### TECHNICAL FIELD

The present disclosure relates to electronic cigarettes, in particular to a battery assembly and an electronic cigarette having the battery assembly.

### BACK GROUND

Typically, an electronic cigarette has an atomizer configured for heating tobacco liquid to force aerosol. The electronic cigarette becomes more and more popular and replaces a traditional cigarette because of its convenience, various tastes, and providing smokers with a healthier option.

An electronic cigarette generally includes an atomizer, and a battery assembly electrically connected with the atomizer for supplying the atomizer power. The battery assembly includes a metal shell, and a battery detachably received in the shell. When the battery is assembled to the shell or disassembled from the shell, it is easily to scrape off a protective surface of the battery and the battery without the protective surface will directly contact to the metal shell. So that, this may short the battery easily, and even make the battery explode.

To overcome the above shortcoming, it is necessary to provide a new battery assembly and an electronic cigarette having the same.

EP 2 562 846A1 discloses a battery, a battery holder and a battery assembling method; WO 2016/1853359 discloses a portable power supply apparatus; US 4 997 731 discloses a packed battery and method of making the same.

### SUMMARY

The present invention provides a battery assembly according to independent claim 1 and an electronic cigarette according to independent claim 5. Various improvements to the battery assembly are recited in the dependent claims.

The present disclosure relates to a battery assembly and an electronic cigarette. The battery assembly includes at least one insulated element, at least one battery, and a shell. The insulated element defines an installation space. The battery is inserted into the space. The shell defines a receiving space for receiving the at least one insulated element and the battery inserted into the insulated element. The at least one battery is prevented from contacting with the shell by the at least one insulated element. The shell further comprises at least one securing element configured for fixing the at least one insulated element on the shell wherein the at least one securing element is an adhesive article. So that, a short circuit between the battery and the shell will not happen.

### BRIEF DESCRIPTION OF THE DRAWINGS

For a better understanding of the embodiments of the present disclosure or the technical scheme in the prior art, accompanying drawings needed in the description of the embodiments or the prior art are simply illustrated below. Obviously, the accompanying drawings described below are some embodiments of the present disclosure. For the ordinary skill in the field, other accompanying drawings may be obtained according to the structure shown in these accompanying drawings without creative work.

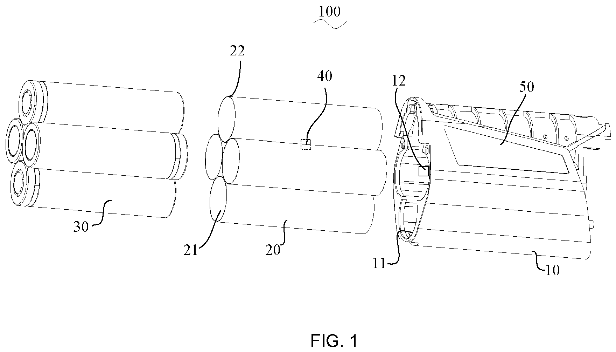

FIG.1 is an exploded perspective view of a battery assembly according to an embodiment.

### DETAILED DESCRIPTION

A clear and complete description as below is provided for the technical scheme in the embodiments of the present disclosure in conjunction with the drawings in the embodiments of the present disclosure. Obviously, the embodiments described hereinafter are simply part embodiments of the present disclosure, but all the embodiments. All other embodiments obtained by the ordinary skill in the art based on the embodiments in the present disclosure without creative work are intended to be included in the scope of protection of the present disclosure.

It should be noted that all directional indications (such as top, bottom, left, right, front, behind...) in the embodiments of the present disclosure are merely to illustrate a relative position relation, a relative motion condition, etc. between each part in a certain state (for example, the state shown in the drawings). If the state changes, the directional indication changes accordingly.

In addition, if terms "first", "second", etc. appear in the present disclosure, they are merely for the purpose of description, but cannot be understood as the indication or implication of relative importance or as the implicit indication of the number of the designated technical features; therefore, features defined by "first" and "second" may specifically or implicitly include one or more such features. In the description of the present disclosure, unless otherwise stated, "a plurality of" means at least two, for example, two, three, etc.

In the present disclosure, unless otherwise specifically stated and defined, terms "connected", "fixed", etc. should be interpreted expansively. For example, "fixed" may be fixed connection, also may be detachable connection, or integration; may be mechanical connection, also may be electrical connection; may be direct connection, also may be indirect connection through an intermediate, and may be internal communication between two elements or interaction of two elements, unless otherwise specifically defined. The ordinary skill in this field can understand the specific implication of the above terms in the present disclosure according to specific conditions.

In addition, technical schemes of each embodiment of the present disclosure maybe combined mutually; however, this must be carried out on the basis that the ordinary skill in this field can implement the combination. When the combination of technical schemes has a conflict or cannot be implemented, it should be considered that such combination of technical schemes does not exist and is not in the scope of protection claimed by the present disclosure.

The present disclosure relates to a battery assembly for an electronic cigarette, aiming to solve the problem of protection of the battery in related art.

Referring to FIG. 1, a battery assembly 100 for an electronic cigarette is configured to supply the electronic cigarette power.

The battery assembly 100 includes a shell 10, an insulated element 20, and a battery 30. The shell 10 is made of metal materials or ceramic materials. The shell 10 defines a receiving space 11. The battery 30 is detachably inserted into the insulated element 20. The insulated element 20 and the battery 30 inserted therein are received in the receiving space 11. In other words, the insulated element 20 is located between the battery 30 and the shell 10, and prevents the battery 30 from contacting with the shell 10 directly. So that the battery 30 is separated from the shell 10 by the insulated element 20, and a short circuit between the battery 30 and the shell 10 will not happen.

In detail, the insulated element 20 defines an installation space 21 and includes a sidewall 22 around the installation space 21. The battery 30 is detachably inserted into the installation space 21. A shape of the insulated element 20 is matched with that of the battery 30.In this present embodiment, the battery 30 is columnar, and the insulated element 20 is hollow cylindrical. To ensure that the battery 30 can be easily disassembled from the insulated element 20, an inner diameter of the insulated element 20 is larger than an outer diameter of the battery 30. Quite usefully, the inner diameter of the insulated element 20 is about 0.4-0.5mm larger than the outer diameter of the battery 30. In other embodiments, the sidewall 22 can define a plurality of grooves or holes or openings extending to the installation space 21. Obviously, the shape of the insulated element 20 can also be but not limited to helical.

Further, a thickness of the sidewall 22 of the insulated element 20 is about 0.1-0.2mm. The inner surface of the sidewall 22 is smooth, can better protect the battery 30 from any damage.

In other embodiments, the battery assembly 100 is provided with a plurality of insulated elements 20. Connecting elements 40 are provided to bind the every two adjacent insulated elements 20 together to prevent the insulated elements from wobbling. The connecting elements 40 can be adhesive articles.

In some embodiments, the shell 10 further includes some securing elements 12 positioned at an inner surface of the shell 10 around the receiving space 11. The securing elements 12 can be adhesive articles.

In some embodiments, the battery assembly 100 further includes a lid (not shown) to hide the receiving space 11.

In some embodiments, the battery assembly 100 further includes a screen 50, and control chip electrically connected with the screen 50. The screen 50 is configured to display battery information.

In some embodiments, the battery assembly 100 further includes a button (not shown) selectively electrically connected with the control chip to turn on and off the battery assembly 100.

The present disclosure also provides an electronic cigarette (not shown). The electronic cigarette includes atomizer (not shown) and electronically connected to the above-described battery assembly. Accordingly, a short circuit between the battery and the shell of battery will not happen.

The above are preferred embodiments of the present disclosure merely and are not intended to limit the patent scope of the present disclosure.

## Claims

1. A battery assembly (100), comprising:
at least one insulated element (20) defining an installation space (21);
at least one battery (30) detachably inserted into the installation space (21); and
a shell (10) defining a receiving space (11) for receiving the at least one insulated element (20) and the at least one battery (30) inserted into the insulated element (20), and the at least one battery (30) being prevented from contacting with the shell (10) by the at least one insulated element (20),
wherein the shell (10) further comprises at least one securing element (12) configured for fixing the at least one insulated element (20) on the shell (10);
**characterized in that** the at least one securing element (12) is an adhesive article.

2. The battery assembly (100) according to claim 1, wherein the at least one insulated element (20) comprises at least two insulated elements (20), the battery assembly (100) further comprises at least one connecting element (40) being located between every two adjacent insulated elements (20) to bind the at least two insulated elements (20) together.

3. The battery assembly (100) according to claim 2, wherein the at least one connecting element (40) is an adhesive article.

4. The battery assembly (100) according to claim 1, wherein the at least one insulated element (20) is cylindrical and matches with the battery (30).

5. An electronic cigarette, comprising:
an atomizer, and
a battery assembly (100) according to any of claims 1-4, the battery assembly (100) being electrically connected to the atomizer and configured for supplying the atomizer power.

## Patentansprüche

1. Batteriebaugruppe (100), umfassend:
mindestens ein isoliertes Element (20), das einen Installationsraum (21) definiert;
mindestens eine Batterie (30), die herausnehmbar in den Installationsraum (21) eingesetzt ist; und
eine Hülle (10), die einen Aufnahmeraum (11) zum Aufnehmen des mindestens einen isolierten Elements (20) und der mindestens einen in das isolierte Element (20) eingesetzten Batterie (30) definiert, und wobei die mindestens eine Batterie (30) durch das mindestens eine isolierte Element (20) daran gehindert wird, mit der Hülle (10) in Kontakt zu kommen,
wobei die Hülle (10) ferner mindestens ein Befestigungselement (12) umfasst, das zum Befestigen des mindestens einen isolierten Elements (20) an der Hülle (10) konfiguriert ist;
**dadurch gekennzeichnet, dass**
das mindestens eine Befestigungselement (12) ein Klebegegenstand ist.

2. Batteriebaugruppe (100) nach Anspruch 1, wobei das mindestens eine isolierte Element (20) mindestens zwei isolierte Elemente (20) umfasst, wobei die Batteriebaugruppe (100) ferner mindestens ein Verbindungselement (40) umfasst, das zwischen jeweils zwei benachbarten isolierten Elementen (20) angeordnet ist, um die mindestens zwei isolierten Elemente (20) miteinander zu verbinden.

3. Batteriebaugruppe (100) nach Anspruch 2, wobei das mindestens eine Verbindungselement (40) ein Klebegegenstand ist.

4. Batteriebaugruppe (100) nach Anspruch 1, wobei das mindestens eine isolierte Element (20) zylindrisch ist und mit der Batterie (30) übereinstimmt.

5. Elektronische Zigarette, umfassend:
einen Zerstäuber und
eine Batterieanordnung (100) nach einem der Ansprüche 1 bis 4, wobei die Batterieanordnung (100) elektrisch mit dem Zerstäuber verbunden ist und zum Versorgen des Zerstäubers mit Energie konfiguriert ist.

## Revendications

1. Ensemble batterie (100) comprenant :
au moins un élément isolé (20) définissant un espace d'installation (21) ;
au moins une batterie (30) insérée de manière détachable dans l'espace d'installation (21) ; et
une coque (10) définissant un espace de réception (11) destiné à la réception dudit au moins un élément isolé (20) et de ladite au moins une batterie (30) insérée dans l'élément isolé (20) et ladite au moins une batterie (30) étant empêchée d'entrer en contact avec la coque (10) par ledit au moins un élément isolé (20),
dans lequel la coque (10) comprend en outre au moins un élément de fixation (12) conçu pour la fixation dudit au moins un élément isolé (20) sur la coque (10) ;
**caractérisé en ce que** ledit au moins un élément de fixation (12) est un article adhésif.

2. Ensemble batterie (100) selon la revendication 1, dans lequel ledit au moins un élément isolé (20) comprend au moins deux éléments isolés (20), l'ensemble batterie (100) comprend en outre au moins un élément de connexion (40) étant situé entre tous les deux éléments isolés adjacents (20) pour lier lesdits au moins deux éléments isolés (20) conjointement.

3. Ensemble batterie (100) selon la revendication 2, dans lequel ledit au moins un élément de connexion (40) est un article adhésif.

4. Ensemble batterie (100) selon la revendication 1, dans lequel ledit au moins un élément isolé (20) est cylindrique et correspond à la batterie (30).

5. Cigarette électronique, comprenant :
un atomiseur ; et
un ensemble batterie (100) selon l'une quelconque des revendications 1 à 4,
l'ensemble batterie (100) étant connecté électriquement à l'atomiseur et conçu pour fournir la puissance de l'atomiseur.
